Europäisches Patentamt

European Patent Office

Office européen des brevets

(19)

(11) EP 1 591 994 A1

(12) EUROPEAN PATENT APPLICATION
published in accordance with Art. 158(3) EPC

(43) Date of publication:
02.11.2005 Bulletin 2005/44

(51) Int Cl.⁷: G09G 5/02, H04N 1/46,
H04N 1/40, H04N 9/64

(21) Application number: 04708918.0

(22) Date of filing: 06.02.2004

(86) International application number:
PCT/JP2004/001301

(87) International publication number:
WO 2004/070699 (19.08.2004 Gazette 2004/34)

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 07.02.2003 JP 2003031541

(71) Applicant: SANYO ELECTRIC CO., LTD.
Moriguchi City, Osaka 570-8677 (JP)

(72) Inventors:
• KINOSHITA, Shigeo, C/o Sanyo Electric Co., Ltd.
Moriguchi City, Osaka 570-8677 (JP)
• MORI, Yukio, C/o Sanyo Electric Co., Ltd.
Moriguchi City, Osaka 570-8677 (JP)
• YAMASHITA, Atsuhiro,
C/o Sanyo Electric Co., Ltd.
Moriguchi City, Osaka 570-8677 (JP)
• TANASE, Susumu, C/o Sanyo Electric Co., Ltd.
Moriguchi City, Osaka 570-8677 (JP)
• INOUE, Masutaka, C/o Sanyo Electric Co., Ltd.
Moriguchi City, Osaka 570-8677 (JP)

(74) Representative: Read, Matthew Charles et al
Venner Shipley LLP
20 Little Britain
GB-London EC1A 7DH (GB)

(54) COLOR SPACE CORRECTION CIRCUIT IN DISPLAY DEVICE

(57) A color space correction circuit in a display apparatus comprises: means for holding optimal R, G and B correction values at chromaticity coordinate points corresponding to a white, primary colors and complementary colors, respectively, in a color reproduction region of a display on a chromaticity diagram; means for connecting the respective chromaticity coordinate points corresponding to the primary colors and the complementary colors to the chromaticity coordinate point corresponding to the white in the color reproduction region of the display on the chromaticity diagram, thereby dividing the color reproduction region of the display into a plurality of areas and judging to which area the chromaticity coordinate points corresponding to input signals belong; and means for correcting R, G and B values for the input signals based on optimal R, G and B correction values corresponding to the chromaticity coordinate points that correspond to three vertexes of the area to which the chromaticity coordinate points corresponding to the input signals are judged to belong, and based on the R, G and B values for the input signals.

FIG. 11

EP 1 591 994 A1

**Description**

TECHNICAL FIELD

The present invention relates to a color space correction circuit in a display apparatus that comprises a display device (a display) such as an organic electroluminescence ("EL") device.

BACKGROUND ART

Although an organic EL device is a hopeful display device, the organic EL device can stand improvement so as to make an organic EL display marketable.

At present, main problems with the organic EL device include, for example, (1) service life, (2) luminance, (3) display uniformity, (4) color reproducibility, (5) gradation expression, and (6) contrast reduction due to an influence of external light. It is considered to be important to improve the color reproducibility if the organic EL device is to be applied to a television set.

Performances of the organic EL display largely depend on materials. A color reproduction region is, in particular, determined by respective chromaticity coordinates of luminous materials of R, G and B. Actually, however, low color purities of the luminous materials prevent ensuring sufficient color reproducibility in the color reproduction region according to an NTSC standard.

As drastic measures to improve the color purities, it is necessary to take device-related measures such as an improvement in organic materials and an improvement in a light extraction efficiency structure. However, it takes lots of time to achieve the device-related improvements. In addition, if the color purities of the present luminous materials are improved, the life is shortened, that is, the improvement in the color purities is a trade-off for the life. Thus, it takes lots of time to achieve the improvements. To promote making the organic EL display marketable, it is also necessary to take measures from viewpoints of a system.

It is an object of the present invention to provide a color space correction circuit in a display apparatus that can improve color reproducibility.

DISCLOSURE OF THE INVENTION

A color space correction circuit according to the present invention comprises: means for holding optimal R, G and B correction values at chromaticity coordinate points corresponding to a white, primary colors and complementary colors, respectively, in a color reproduction region of a display on a chromaticity diagram; means for connecting the respective chromaticity coordinate points corresponding to the primary colors and the complementary colors to the chromaticity coordinate point corresponding to the white in the color reproduction region of the display on the chromaticity diagram, thereby dividing the color reproduction region of the display into a plurality of areas and judging to which area the chromaticity coordinate points corresponding to input signals belong; and means for correcting R, G and B values for the input signals based on optimal R, G and B correction values corresponding to the chromaticity coordinate points that correspond to three vertexes of the area to which the chromaticity coordinate points corresponding to the input signals are judged to belong , and based on the R, G and B values for the input signals.

The optimal R, G and B correction values at the chromaticity coordinate points corresponding to the white, the primary colors, and the complementary colors, respectively, in the color reproduction region of the display on the chromaticity diagram are calculated from the chromaticity coordinate points corresponding to the white, the primary colors and the complementary colors in a target predetermined color reproduction region on the chromaticity diagram, the chromaticity coordinate points corresponding to the white, the primary colors and the complementary colors in the color reproduction region of the display on the chromaticity diagram, and the target chromaticity coordinate point corresponding to the white on the chromaticity diagram. As the target predetermined color reproduction region on the chromaticity diagram, the color reproduction region according to the NTSC standard is used, for example. The optimal R, G and B correction values at the chromaticity coordinate points corresponding to the white, the primary colors and the complementary colors, respectively, in the color reproduction region of the display on the chromaticity diagram may be set by a subjective evaluation.

A corrected luminance of an R when only the R is used differs from the corrected luminance of the R at white 100%, a corrected luminance of a G when only the G is used differs from the corrected luminance of the G at white 100%, or a corrected luminance of a B when only the B is used differs from the corrected luminance of the B at white 100%.

A corrected video signal level of an R when only the R is used differs from the corrected video signal level of the R at white 100%, a corrected video signal level of a G when only the G is used differs from the corrected video signal level of the G at white 100%, or a corrected video signal level of a B when only the B is used differs from the corrected video signal level of the B at white 100%.

A corrected luminance of a cyan, that is the complementary color for an R, when only the cyan is used differs from a sum of a corrected luminance of a G at white 100% and a corrected luminance of a B at white 100%, a corrected luminance of a magenta, that is the complementary color for the G, when only the magenta is used differs from a sum of a corrected luminance of the R at white 100% and the corrected luminance of the B at white 100%, or a corrected luminance of yellow, that is the complementary color for the B, when only the yellow is used differs from a sum of the corrected luminance of the R at white 100% and the corrected luminance of the G at white 100%.

A corrected video signal level of a cyan, that is the complementary color for an R, when only the cyan is used differs from a sum of a corrected video signal level of a G at white 100% and a corrected video signal level of a B at white 100%, a corrected video signal level of a magenta, that is the complementary color for the G, when only the magenta is used differs from a sum of a corrected video signal level of the R at white 100% and the corrected video signal level of the B at white 100%, or a corrected video signal level of yellow, that is the complementary color for the B, when only the yellow is used differs from a sum of the corrected video signal level of the R at white 100% and the corrected video signal level of the G at white 100%.

An optimal chromaticity coordinate point corresponding to a cyan that is the complementary color for an R in the color reproduction region of the display on the chromaticity diagram is set at a position shifted from a point of an intersection between a line that passes the chromaticity coordinate point corresponding to the R and the chromaticity coordinate point corresponding to the white in the color reproduction region of the display and a line that passes the chromaticity coordinate point corresponding to a G and the chromaticity coordinate point corresponding to a B in the color reproduction region of the display, toward the chromaticity coordinate point corresponding to the G or the chromaticity coordinate point corresponding to the B.

An optimal chromaticity coordinate point corresponding to a magenta that is the complementary color for the G in the color reproduction region of the display on the chromaticity diagram is set at a position shifted from a point of an intersection between a line that passes the chromaticity coordinate point corresponding to the G and the chromaticity coordinate point corresponding to the white in the color reproduction region of the display and a line that passes the chromaticity coordinate point corresponding to the R and the chromaticity coordinate point corresponding to the B in the color reproduction region of the display, toward the chromaticity coordinate point corresponding to the R or the chromaticity coordinate point corresponding to the B.

An optimal chromaticity coordinate point corresponding to a yellow that is the complementary color for the B in the color reproduction region of the display on the chromaticity diagram is set at a position shifted from a point of an intersection between a line that passes the chromaticity coordinate point corresponding to the B and the chromaticity coordinate point corresponding to the white in the color reproduction region of the display and a line that passes the chromaticity coordinate point corresponding to the R and the chromaticity coordinate point corresponding to the G in the color reproduction region of the display, toward the chromaticity coordinate point corresponding to the R or the chromaticity coordinate point corresponding to the G.

An optimal chromaticity coordinate point corresponding to a cyan that is the complementary color for an R in the color reproduction region of the display on the chromaticity diagram is set at a point of an intersection between a line that passes the chromaticity coordinate point corresponding to a G and the chromaticity coordinate point corresponding to a B in the color reproduction region of the display and a line that passes the chromaticity coordinate point corresponding to the R and the chromaticity coordinate point corresponding to the white in a target predetermined color reproduction region on the chromaticity diagram.

An optimal chromaticity coordinate point corresponding to a magenta that is the complementary color for the G in the color reproduction region of the display on the chromaticity diagram is set at a point of an intersection between a line that passes the chromaticity coordinate point corresponding to the R and the chromaticity coordinate point corresponding to the B in the color reproduction region of the display and a line that passes the chromaticity coordinate point corresponding to the R and the chromaticity coordinate point corresponding to the white in the target predetermined color reproduction region on the chromaticity diagram.

An optimal chromaticity coordinate point corresponding to a yellow that is the complementary color for the B in the color reproduction region of the display on the chromaticity diagram is set at a point of an intersection between a line that passes the chromaticity coordinate point corresponding to the R and the chromaticity coordinate point corresponding to the G in the color reproduction region of the display and a line that passes the chromaticity coordinate point corresponding to the B and the chromaticity coordinate point corresponding to the white in the target predetermined color reproduction region on the chromaticity diagram.

**EP 1 591 994 A1**

BRIEF DESCRIPTION OF THE DRAWINGS

Fig. 1 is a graph that depicts a color reproduction region according to an NTSC standard and that of an organic EL display on a chromaticity diagram.

Fig. 2 is a table that shows a relationship among luminances (cd/m$^2$) according to the NTSC standard, luminances without correction on an organic EL display, luminances with correction which are not subjected to normalization (to be described later) on the organic EL display, luminances with correction which are subjected to the normalization (to be described later) on the organic EL display, and correction signals (Rout, Gout, Bout) for input signals (Rin, Gin, Bin) (%) corresponding to W, R, G, B, C, M and Y

Fig. 3 is a typical view for describing a method of calculating an NTSC standard luminance (0, LGg, 0) for a chromaticity coordinate point *G corresponding to G in the color reproduction region of the organic EL display.

Fig. 4 is a typical view for describing the method of calculating the NTSC standard luminance (0, LGg, 0) for the chromaticity coordinate point *G corresponding to G in the color reproduction region of the organic EL display.

Fig. 5 is a typical view for describing a method of calculating optimal luminances (LYr, LYg, 0) at a chromaticity coordinate point *Y corresponding to Y in the color reproduction region of the organic EL display.

Fig. 6 is a graph for describing a method of calculating the luminance LYr of R at Y' shown in Fig. 5.

Fig. 7 is a graph for describing a method of calculating the luminance LYg of G at Y' shown in Fig. 5.

Fig. 8 is a graph for describing a method of calculating Rw, Rs, Rm and Ry from LWr, LRr, LMr and LYr.

Fig. 9 is a typical view which depicts 13 areas S1 to S13 classified according to an RGB magnitude relationship among input video signals.

Fig. 10 is a table that depicts correction formulas for the respective areas S1 to S13.

Fig. 11 is a block diagram which depicts a configuration of a color space correction circuit.

Fig. 12 is an electric circuit diagram which depicts a configuration of an Rout calculation section 21 shown in Fig. 11.

Fig. 13 is a graph which depicts ordinary ADC input/output characteristics.

Fig. 14 is a graph which depicts ADC input/output characteristics according to an embodiment of the present invention.

BEST MODE FOR CARRYING OUT THE INVENTION

An embodiment in which the present invention is applied to a display apparatus that comprises an organic EL device will be described hereinafter with reference to the drawings.

1. Description of Color Reproducibility Problems

The following problems occur if color purities of R, G and B are low:

(1) low color reproducibility for primary colors,
(2) poor balance of luminances of the primary colors, and
(3) shift of color phases of complementary colors.

The respective problems will be described while referring to chromaticity coordinate characteristics according to the NTSC standard and those on the organic EL display.

(1) Color reproducibility for primary colors

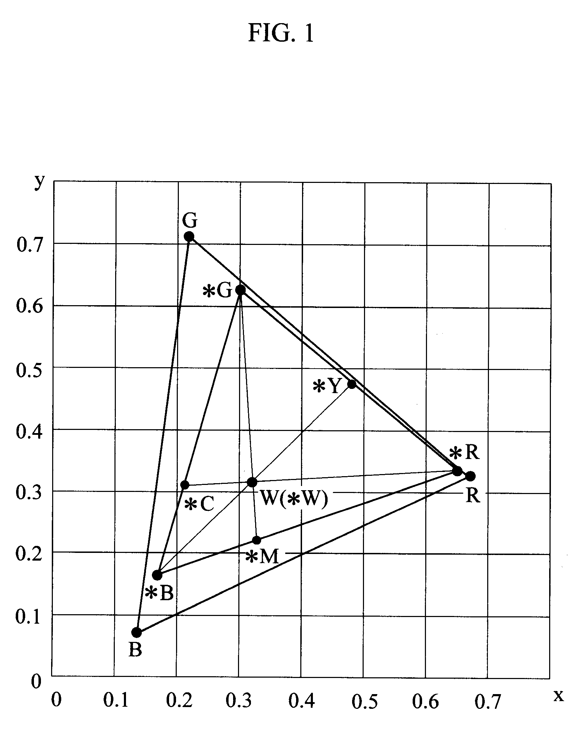

Fig. 1 shows a color reproduction region according to the NTSC standard and that on the organic EL display on a chromaticity diagram.

Referring to Fig. 1, a triangle region having chromaticity coordinate points R, G and B as vertexes is the color reproduction region according to the NTSC standard. A triangle region having chromaticity coordinate points *R, *G and *B as vertexes is the color reproduction region on the organic EL display.

Chromaticity coordinates of W (White), R (Red), G (Green) and B (Blue) according to the NTSC standard are as follows.

W (0.310, 0.316), R (0.67, 0.33), G (0.21, 0.71), B (0.14, 0.08)

Chromaticity coordinates of *W (White), *R (Red), *G (Green) and *B (Blue) on the organic EL display are as follows.

*W (0.310, 0.316), *R (0.65, 0.34), *G (0.30, 0.63), *B (0.17, 0.17)

4

The chromaticity coordinates of the *G and *B on the organic EL display are, in particular, located at positions closer to white rather than those of the G and B according to the NTSC standard, respectively. Therefore, the organic EL display cannot produce depths of the primary colors.

(2) Balance of luminances of primary colors

According to the NTSC standard, an RGB luminance ratio at white 100% is 3 : 6 : 1. Consequently, on a display having good color purities, the RGB luminance ratio is close to 3 : 6 : 1 at white 100%.

On the other hand, on a display having low color purities, the RGB luminance ratio for realizing white 100% is largely deviated from that according to the NTSC standard. As shown in Fig. 1, at the chromaticity coordinate points *G and *B corresponding to the G and B on the organic EL display largely deviated from the chromaticity coordinate points G and B corresponding to the G and B according to the NTSC standard, luminances differ from original luminances, respectively. On the organic EL display, the luminance for displaying G 100% is lower than the original luminance.

(3) Shift of color phases of complementary colors

A complementary color for the R is C (Cyan), that for the G is M (Magenta), and that for the B is Y (Yellow).

As shown in Fig. 1, on the organic EL display, the color purity of the *B is low and a y value in the chromaticity coordinate of the *B is large. Therefore, a problem occurs that *Y (Yellow) that is the complementary color for the *B is closer to *R and becomes orange. In addition, *M (Magenta) that is the complementary color for the *G is closer to *W. A problem occurs that the *M is lighter. In this way, the low purities of the R, G and B deteriorate the overall color reproducibility for not only the primary colors of R, G and B but also their complementary colors.

As for the problem (1), it is difficult to solve it by circuit technique. As for the problems (2) and (3), they can be solved by the circuit technique. In this embodiment, by realizing an optimal luminance ratio in each color space, the problems (2) and (3) are solved and the color reproducibility is improved.

2. Description of Method of Improving Color Reproducibility

In this embodiment, the RGB luminance ratio is optimized at each of the chromaticity coordinate points *W, *R, *G, *B, *C, *M and *Y corresponding to W, R, G, B, C, M and Y, respectively, in the color reproduction region of the organic EL display, and the optimized RGB luminance ratio is expanded to all the color spaces. The improvement in the color reproducibility is thereby realized. Specifically, a correction processing is performed in the following steps of procedures:

(1) calculate an RGB luminance ratio at WB (White Balance) (RGB luminance ratio at white 100%);
(2) calculate an optimal luminance of each of the primary colors (R, G B) in the color reproduction region of the display on the chromaticity diagram at each color 100%;
(3) calculate an optimal luminance of each of the complementary colors (C, M, Y) in the color reproduction region of the display on the chromaticity diagram at each color 100%;
(4) calculate optimal R, G and B correction values at the chromaticity coordinate points corresponding to the white, the primary colors and the complementary colors, respectively, in the color reproduction region of the display based on calculation results of (1) and (2); and
(5) Correct input video signals using the respective R, G and B correction values calculated at the step (4).

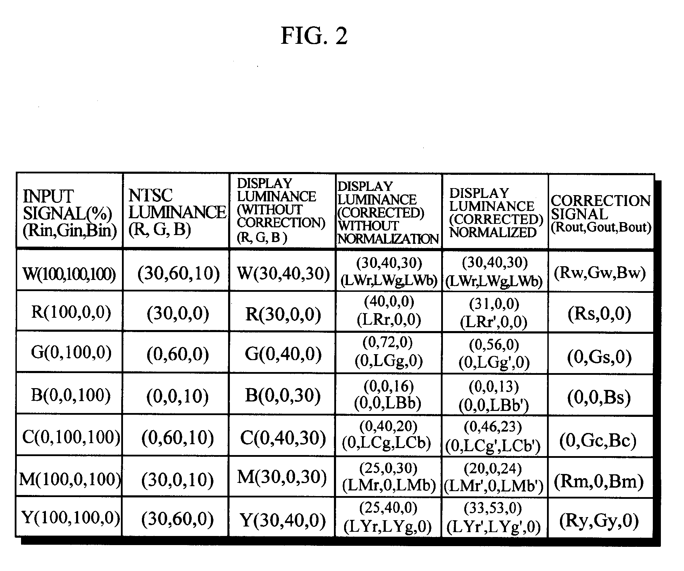

Fig. 1 shows the color reproduction region according to the NTSC standard and that of the organic EL display on the chromaticity diagram. Fig. 2 is a table that shows a relationship among luminances (cd/m$^2$) according to the NTSC standard, luminances without correction on an organic EL display, luminances with correction which are not subjected to normalization (to be described later) on the organic EL display, luminances with correction which are subjected to the normalization (to be described later) on the organic EL display, and correction signals (Rout, Gout, Bout) for input signals (Rin, Gin, Bin) (%) corresponding to W, R, G, B, C, M and Y In this embodiment, there is shown a case of adjusting the luminance of the white 100 % to 100 cd/m$^2$.

In Fig. 2, the luminances with correction which are not subjected to normalization on the organic EL display, the luminances with correction which are subjected to normalization on the organic EL display, and the correction signals (Rout, Gout, Bout) are obtained as follows.

2-1. Description of Method of Calculating RGB Luminance Ratio at WB (White Balance)

LWr, LWg and LWb in the luminances with correction which are not subjected to normalization on the organic EL display shown in Fig. 2 are obtained. The obtained LWr, LWg and LWb are used as LWr, LWg and LWb in the luminances with correction which are subjected to normalization on the organic EL display shown in Fig. 2, respectively.

First, the chromaticity coordinates of R, G and B in the color reproduction region of the organic EL display are assumed as R (xr, yr), G (xg, yg) and B (xb, yb), respectively, and a target chromaticity coordinate of the target white is assumed as W (xw, yw). The RGB luminance ratio is a ratio of R, G and B expressed by the following equations (1).

$$R=\frac{((yg\text{-}yb)\times xw+(yb\text{-}yw)\times xg+(yw\text{-}yg)\times xb)\times yr}{K\times yw}$$

$$G=\frac{((yb\text{-}yr)\times xw+(yr\text{-}yw)\times xb+(yw\text{-}yb)\times xr)\times yg}{K\times yw} \qquad (1)$$

$$B=\frac{((yr\text{-}yg)\times xw+(yg\text{-}yw)\times xr+(yw\text{-}yr)\times xg)\times yb}{K\times yw}$$

in which

$$K=xr\times(yg\text{-}yb)+xg\times(yb\text{-}yr)+xb\times(yr\text{-}yg)$$

If K1 is assumed as K1 = R + G + B and L is a target luminance of the white, the luminances LWr, LWg and LWb of the respective R, G and B for W are expressed by the following equations (2)

$$LWr = (L/K1) \times R$$

$$LWg = (L/K1) \times G \qquad (2)$$

$$LWb = (L/K1) \times B$$

In this example, the LWr, LWg and LWb are 30, 40 and 30, respectively (LWr = 30, LWg = 40 and LWb = 30) as shown in Fig. 2.

2-2. Description of Method of Calculating Optimal Luminances of Respective Primary Colors (R, G, B) at Each Color 100% in Color Reproduction Region of Display on Chromaticity Diagram

The optimal luminances at the chromaticity coordinate points *R, *G and *B corresponding to the respective primary colors (R, G, B) in the color reproduction region of the organic EL display are calculated. First, the LRr, LGg and LBb in the luminances with correction which are not subjected to normalization on the organic EL display shown in Fig. 2 are first obtained. The obtained LRr, LGg and LBb are subjected to normalization, thereby obtaining LRr', LGg' and LBb' in the with correction which are subjected to normalization on the organic EL display shown in Fig. 2.

The method of calculating the LRr, LGg and LBb in the luminances with correction which are not subjected to normalization on the organic EL display will first be described.

The NTSC standard luminances at the chromaticity coordinate points *R, *G and *B corresponding to the respective primary colors (R, G, B) in the color reproduction region of the organic EL display are assumed as optimal luminances at the chromaticity coordinate points *R, *G and *B corresponding to the respective primary colors (R, G, B) in the color reproduction region of the organic EL display.

A case of calculating the NTSC standard luminance (0, LGg, 0) at the chromaticity coordinate point *G corresponding to the G in the color reproduction region of the organic EL display will be described herein.

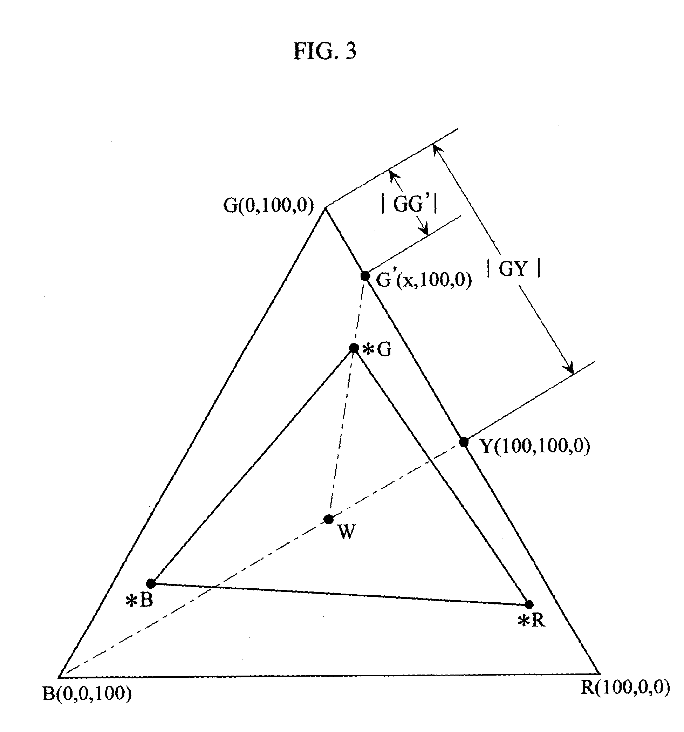

Fig. 3 simply depicts the relationship between the color reproduction region according to the NTSC standard and that of the organic EL display on the chromaticity diagram. In Fig. 3, the chromaticity coordinate point corresponding to the W on the organic EL display is set at the same position as that of the chromaticity coordinate point corresponding to the W according to the NTSC standard for convenience of description.

Referring to Fig. 3, *R, *G and *B depict the chromaticity coordinate points corresponding to the R, G and B in the color reproduction region of the organic EL display, and the R, G, B and Y denote those corresponding to the R, G, B and Y in the color reproduction region according to the NTSC standard, respectively.

A position at which a line that passes the W and the *G intersects a line that connects the G to the Y is assumed as G'. As shown in Fig. 3, input signals (%) corresponding to the chromaticity coordinate points W, R, G, B and Y according to the NTSC standard are assumed as W (100, 100, 100), R (100, 0, 0), G (0, 100, 0), B (0, 0, 100) and Y (100, 100, 0). On a segment |GY|, Rin changes from 0% to 100% in a direction from the G to the Y In addition, Gin is 100% (constant) and Bin is 0% (constant). Accordingly, the input signal (%) corresponding to the position G' can be expressed as G' (x, 100, 0).

The value x is calculated by the following equation (3).

$$x : 100 = |GG'| : |GY|$$

$$\therefore \ x = 100 \times \frac{|GG'|}{|GY|} \tag{3}$$

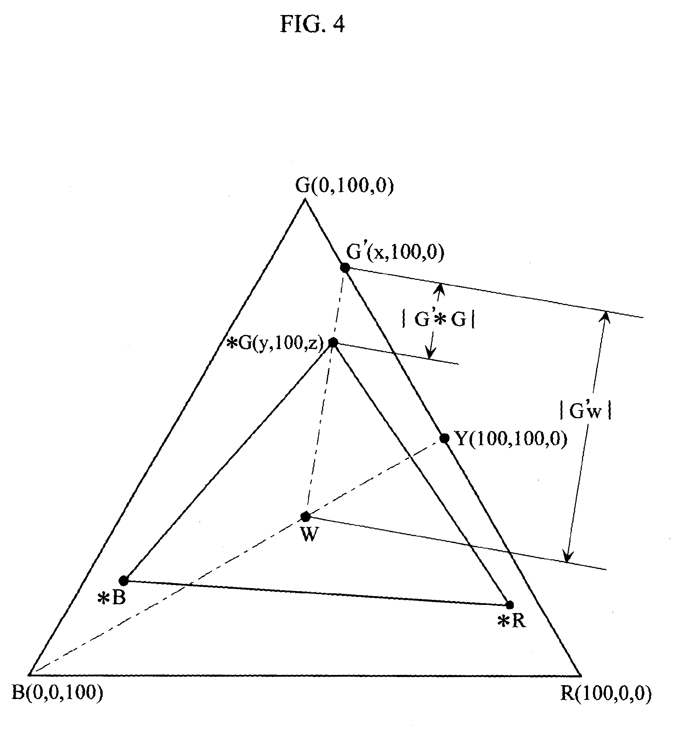

As shown in Fig. 4, on a segment |G'W|, Rin changes from x% to 100% in a direction from the G' to the W. In addition, Gin is 100% (constant), and Bin changes from 0% to 100% in the direction from the G' to the W. Accordingly, the input signal (%) corresponding to the position *G relative to the NTSC standard color reproduction region can be expressed as *G (y, 100, z).

The values y and z are calculated by the following equations (4) and (5), respectively.

$$(y - x) : (100 - x) = |G'^*G| : |G'W|$$

$$\therefore y = 100 \times \frac{|G'^*G|}{|G'W|} + x \times \left(1 - \frac{|G'^*G|}{|G'W|}\right) \ \dots \ (4)$$

$$z : 100 = |G'^*G| : |G'W|$$

$$\therefore z = 100 \times \frac{|G'^*G|}{|G'W|} \tag{5}$$

Accordingly, the original luminance LGg on the NTSC standard chromaticity coordinate at the *G is (30y/100) + 60 + (10z/100).

Likewise, the optimal luminance (LRr, 0, 0) at the chromaticity coordinate point *R corresponding to the R in the color reproduction region on the organic EL display, and the optimal luminance (0, 0, LBb) at the chromaticity coordinate point *B corresponding to the B in the color reproduction region on the organic EL display are calculated. In this example, LRr, LGg and LBb are 40, 72 and 16, respectively (LRr = 40, LGg = 72 and LBb = 16) as shown in Fig. 2.

Next, the calculated LRr, LGg and LBb are subjected to normalization. The luminances LRr, LGg and LBb are subjected to normalization so as to satisfy LRr' + LGg' + LBb' = LWr + LWg + LWb if normalized luminances are LRr', LGg' and LBb'.

The normalized luminances LRr', LGg' and LBb' are calculated by the following equations (6).

$$LRr' = \{LRr/(LRr + LGg + LBb)\} \times 100$$

$$LGg' = \{LGg/(LRr + LGg + LBb)\} \times 100 \tag{6}$$

$$LBb' = \{LBb/(LRr + LGg + LBb)\} \times 100$$

In this example, LRr', LGg' and LBb' are 31, 56 and 13 (LRr' = 31, LGg' = 56 and LBb' = 13), respectively, as shown in Fig. 2.

2-3. Description of Method of Calculating Optimal Luminances of Respective Complementary Colors (C, M, Y) in Color Reproduction Region of Display on Chromaticity Diagram at Each Color 100%

Optimal luminances at the chromaticity coordinate points *C, *M and *Y corresponding to the respective complementary colors (C, M, Y) on the organic EL display are calculated. First, LCG, LCb, LMr, LMb, LYr and LYg in the luminances with correction which are not subjected to normalization on the organic EL display shown in Fig. 2 are calculated. The calculated LCG, LCb, LMr, LMb, LYr and LYg are subjected to normalization, thereby obtaining LCG', LCb', LMr', LMb', LYr' and LYg' in the luminances with correction which are subjected to normalization on the organic EL display shown in Fig. 2, respectively.

The method of calculating the LCG, LCb, LMr, LMb, LYr and LYg in the luminances with correction which are not subjected to normalization on the organic EL display will first be described.

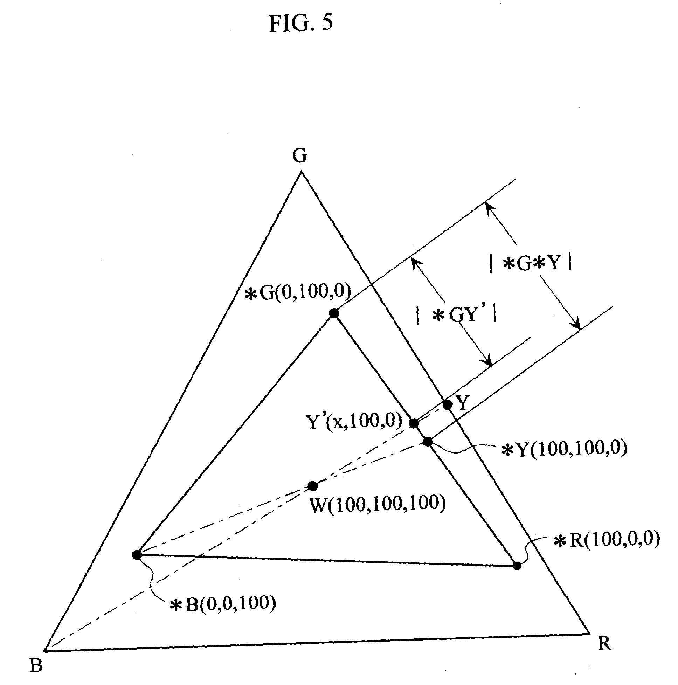

A case of calculating the optimal luminance (LYr, LYg, 0) at the chromaticity coordinate point *Y corresponding to the Y in the color reproduction region of the organic EL display will be described herein with reference to Fig. 5.

In Fig. 5, *R, *G and *B denote the chromaticity coordinate points corresponding to R, G, B and Y in the color reproduction region of the organic EL display, and R, G, B and Y denote those corresponding to R, G, B and Y in the NTSC standard color reproduction region, respectively.

It is assumed that a point at which a line that connects the B to the W intersects a segment that connects the *G to the *Y is Y'. This point Y' is the closest color to the Y according to the NTSC standard in the color reproduction region of the organic EL display. The luminance of the point Y' relative to the color reproduction region of the organic EL display is calculated as the optimal luminance of the *Y

As shown in Fig. 5, input signals (%) corresponding to the chromaticity coordinate points *W, *R, *G, *B and *Y on the organic EL display are assumed as W (100, 100, 100), R (100, 0, 0), G (0, 100, 0), B (0, 0, 100) and Y (100, 100, 0), respectively. On a segment |*G*Y|, Rin changes from 0% to 100% in a direction from the *G to the *Y. In addition, Gin is 100% (constant), and Bin is 0% (constant). Accordingly, the input signal (%) corresponding to the position Y' can be expressed as Y' (x, 100, 0).

The value x is calculated by the following equation (7).

$$x:100 = |{*GY'}|:|{*G*Y}|$$

$$\therefore \ x = 100 \times \frac{|{*GY'}|}{|{*G*Y}|} \tag{7}$$

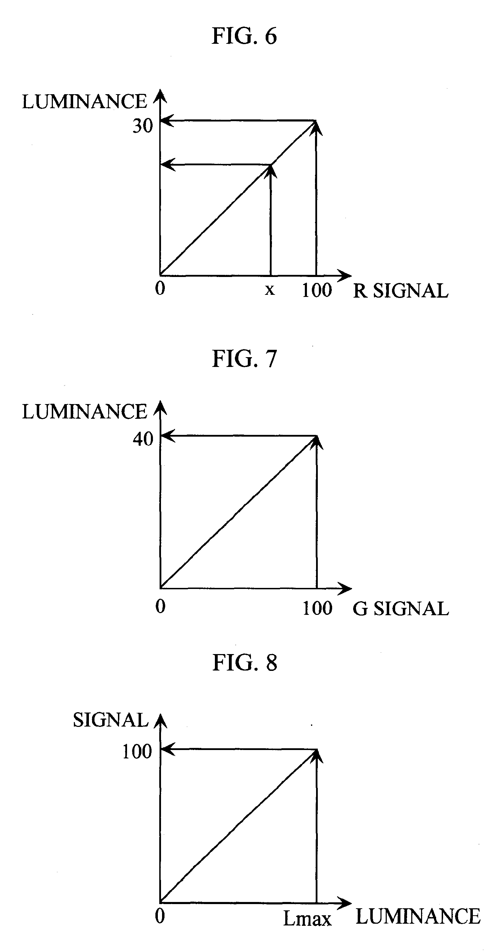

The input signal (%) corresponding to the *Y is (100, 100, 0), and the R, G and B luminances corresponding to the Y are (30, 40, 0) on the organic EL display. As shown in Fig. 6, the luminance LYr of the R at the Y' is expressed by LYr = 30 × (x/100). As shown in Fig. 7, the luminance LYg of the G at the Y' is 40. The luminances (LYr, LYg, 0) are assumed as the optimal luminances at the chromaticity coordinate point *Y corresponding to the Y in the color reproduction region of the organic EL display.

Likewise, the optimal luminances (0, LCg, LCb) at the chromaticity coordinate point *C corresponding to the C in the color reproduction region of the organic EL display, and the optimal luminances (LMr, 0, LMb) at the chromaticity coordinate point *M corresponding to the M in the color reproduction region of the organic EL display are calculated. In this example, LCG, LCb, LMr, LMb, LYr and LYg are 40, 20, 25, 30, 25 and 40, respectively (LCG = 40, LCb = 20, LMr = 25, LMb = 30, LYr = 25 and LYg = 40) as shown in Fig. 2.

The calculated LCG, LCb, LMr, LMb, LYr and LYg are subjected to normalization. The luminances LCG, LCb, LMr, LMb, LYr and LYg are subjected to normalization so that a sum of the luminances of the respective complementary colors is a sum of luminances of two single colors that can synthesize the complementary colors.

If normalized luminances of the luminances LCG, LCb, LMr, LMb, LYr and LYg are LCG', LCb', LMr', LMb', LYr' and LYg', respectively, the LCG', LCb', LMr', LMb', LYr' and LYg' are calculated by the following equations (8).

$$\bullet\ LCg'+LCb'=LGg'+LBb'$$

$$\rightarrow\left(\begin{array}{l}LCg'=LCg\,/(LGg'+LBb')\\LCb'=LCb\,/(LGg'+LBb')\end{array}\right)$$

$$\bullet\ LMb'=LMr'=LBb'+LRr'$$

$$\rightarrow\left(\begin{array}{l}LMb'=LMb\,/(LBb'+LRr')\\LMr'=LMr\,/(LBb'+LRr')\end{array}\right)\ \ ...\ (8)$$

$$\bullet\ L\ddot{Y}r'+LYg'=LRr'+LGg'$$

$$\rightarrow\left(\begin{array}{l}LYr'=LYr\,/(LRr'+LGg')\\LYg'=LYg\,/(LRr'+LGg')\end{array}\right)$$

In this example, the LGG', LCb', LMr', LMb', LYr' and LYg' are 46, 23, 20, 24, 33 and 53, respectively, (LGG' = 46, LCb' = 23, LMr' = 20, LMb' = 24, LYr' = 33 and LYg' = 53) as shown in Fig. 2.

2-4. Description of Method of Calculating Optimal R, G and B Correction Values at Chromaticity Coordinate Points Corresponding to White, Primary Colors and Complementary Colors, respectively, in Color Reproduction Region of Display

As shown in Table 1, optimal R, G and B correction values (correction signals) for the input video signals corresponding to the W, R, G, B, C, M and Y are calculated. That is, Rw, Gw, Bw, Rs, Gs, Bs, Gc, Bc, Rm, Bm, Ry and Gy in the correction signals shown in Fig. 2 are calculated.

Table 1

|   | R | G | B |
|---|---|---|---|
| W | Rw | Gw | Bw |
| R | Rs | 0 | 0 |
| G | 0 | Gs | 0 |
| B | 0 | 0 | Bs |
| C | 0 | Gc | Bc |
| M | Rm | 0 | Bm |
| Y | Ry | Gy | 0 |

First, Rw, Rs, Rm and Ry are calculated from LWr, LRr, LMr and LYr, respectively. The LWr, LRr, LMr and LYr are generically denoted by LQr. It is assumed that a maximum value of the LWr, LRr, LMr and LYr is Lmax, and that a correction value for the Lmax is 100%. As shown in Fig. 8, assuming that a relationship between the LQr and the correction value is (correction value) = (100/Lmax)·LQr, correction values for the other LQr's are calculated. A calculation formula for the correction values is a formula employed when it is assumed that a display panel adjusted so that a relationship between an input signal and a luminance is a linear relationship. If a display panel having a characteristic that the relationship between the input signal and the luminance differs from the linear relationship, e.g., having a $\gamma$ characteristic of $2.2^{th}$ power of the linear relationship, the calculation formula for the correction values is $(100/Lmax)^{(1/2.2)}\cdot LQr$.

Likewise, Gw, Gs, Gc and Gy are calculated from LWg, LGg, LCg and LYg, respectively. In addition, Bw, Bs, Bc and Bm are calculated from LWb, LBb, LCb and LMb, respectively. 2-5. Description of Method of Correcting Input Video Signal Using Correction Values

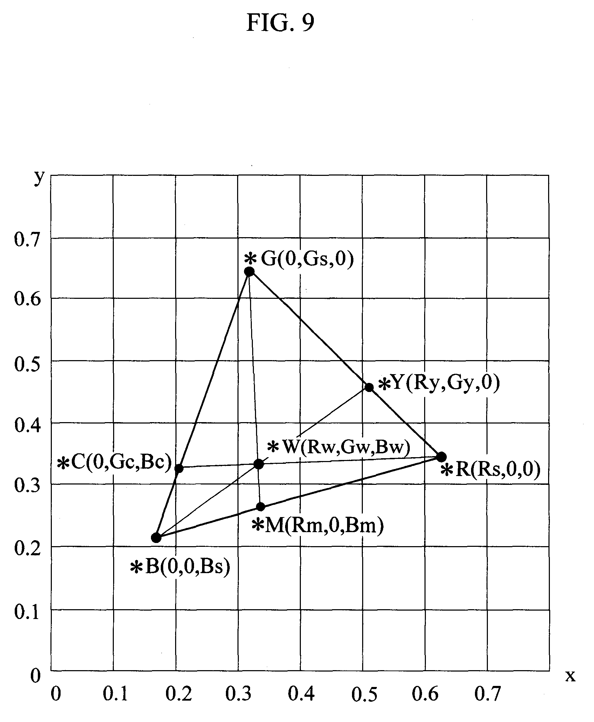

As shown in Fig. 9, the color reproduction region of the organic EL display is divided into 13 areas S1 to S13 classified according to an RGB magnitude relationship among the input video signals.

S1: R > G > B (area *W - *Y - *R)

S2: G > R > B (area *W - *Y - *G)

S3: G > B > R (area *W - *C - *G)

S4: B > G > R (area *W - *C - *B)

S5: B > R > G (area *W - *M - *B)

S6: R > B > G (area *W - *M - *R)

S7: R = G > B (line *W - *Y)

S8: G = B > R (line *W - *C)

S9: B = R > G (line *W - *M)

S10: R > G = B (line *W - *R)

S11: G > B = R (line *W - *G)

S12: B > R = G (line *W - *B)

S13: R = G = B (*W)

Herein, a case in which the magnitude relationship among the input video signals is R > G > B will be described. If the magnitude relationship among the input video signals is R > G > B, the chromaticity coordinate points corresponding to the respective input video signals belong to the S1. The area S1 is a triangle area having the *W, *Y and *R as vertexes. Therefore, the input video signals are corrected based on correction values for the *W, *Y and *R, respectively.

Table 2 shows correction values (output signals) for the input video signals corresponding to the W, Y and R.

Table 2

| Input | Rout | Gout | Bout |
|---|---|---|---|
| W (100, 100, 100) | Rw | Gw | Bw |
| Y (100, 100, 0) | Ry | Gy | 0 |
| R (100, 0, 0) | Rs | 0 | 0 |

The method of calculating the correction values (Rout, Gout, Bout) for the input video signals (Rin, Gin, Bin) will be described.

The correction values Rout, Gout and Bout are expressed as functions of the input video signals Rin, Gin and Bin, respectively, as expressed by the following equations (9)

$$R_{out} = (a1 \times R_{in} + b1 \times G_{in} + c1 \times B_{in})/100$$

$$G_{out} = (a2 \times R_{in} + b2 \times G_{in} + c2 \times B_{in})/100 \qquad (9)$$

$$B_{out} = (a3 \times R_{in} + b3 \times G_{in} + c3 \times B_{in})/100$$

Herein, a1, a2, a3, b1, b2, b3, c1, c2 and c3 are correction coefficients.

By assigning the values shown in Table 2 to the above equations (9), the correction coefficients a1 to c3 can be calculated.

To calculate the correction coefficients a1, b1 and c1, for example, the values in Table 2 are assigned to the equation that expresses Rout in the equations (9). If so, the following simultaneous equations (10) are obtained.

$$Rw = \{100 \times a1 + 100 \times b1 + 100 \times c1\}/100$$

$$Ry = \{100 \times a1 + 100 \times b1\}/100 \qquad (10)$$

$$Rs = \{100 \times a1\}/100$$

By solving the above simultaneous equations (10), a1 = Rs, b1 = Ry - Rs, and c1 = Rw - Ry are obtained.

The correction coefficients a1 to c3 in the equations (9) are expressed as follows.

| a1 = Rs, | b1 = Ry-Rs, | c1 = Rw-Ry |
|---|---|---|
| a2=0, | b2=Gy, | c2=Gw-Gy |
| a3=0, | b3=0, | c3=Bw |

Accordingly, the correction formulas for the area S1 are expressed by the following equations (11).

$$R_{out} = \{Rs \times R_{in} + (Ry - Rs) \times G_{in} + (Rw - Ry) \times B_{in}\}/100$$

$$G_{out} = \{Gy \times G_{in} + (Gw - Gy) \times B_{in}\}/100 \qquad (11)$$

$$B_{out} = \{Bw \times B_{in}\}/100$$

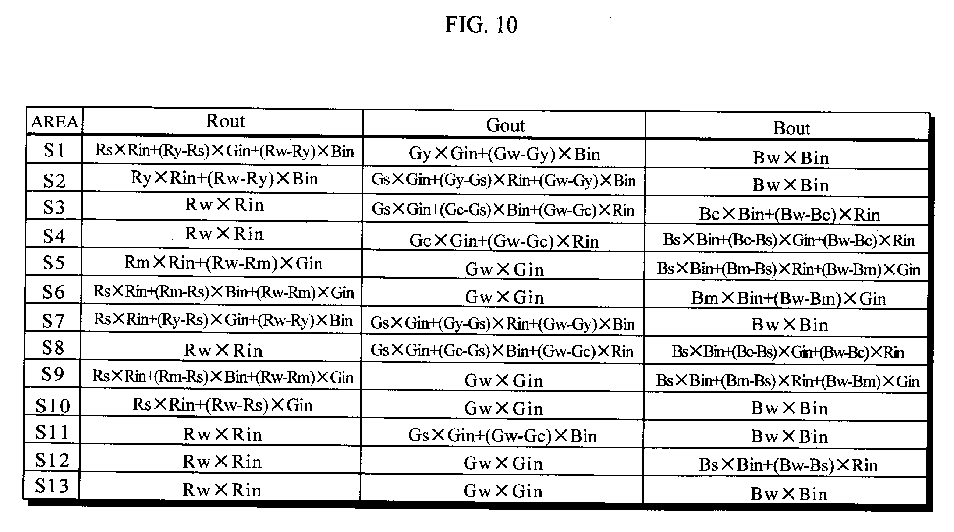

In this way, the correction formulas for the respective areas S1 to S13 are obtained. Fig. 10 shows the correction formulas (correction formulas before being divided by 100) for the respective areas S1 to S13.

2. Description of Color Space Correction Circuit

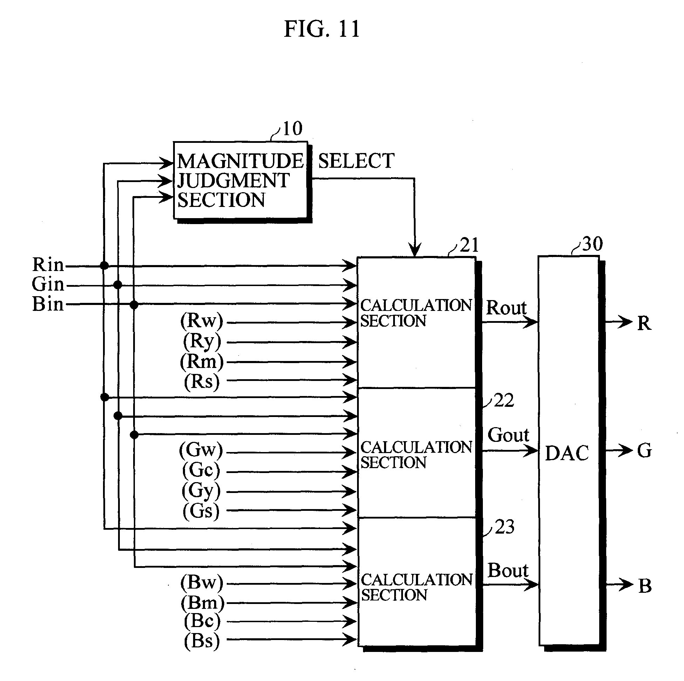

Fig. 11 depicts a configuration of a color space correction circuit.

The input video signals Rin, Gin and Bin are transmitted to a magnitude judgment section 10, and also transmitted to an Rout calculation section 21, a Gout calculation section 22 and a Bout calculation section 23.

The correction values Rw, Ry, Rm and Rs are applied to the Rout calculation section 21. The correction values Gw, Gc, Gy and Gs are applied to the Gout calculation section 22. The correction values Bw, Bm, Bc and Bs are applied to the Bout calculation section 23.

The magnitude judgment section 10 judges which of the 13 conditions shown in Table 3 each input video signal corresponds to, and outputs a selection signal (SELECT) corresponding to the corresponding condition. This selection signal represents which of the areas S1 to S13 the chromaticity coordinate of each input video signal corresponds to. The selection signal output from the magnitude judgment section 10 is applied to the respective calculation sections 21, 22 and 23.

Table 3

| Condition | SELECT |
|---|---|
| R>G>B | 1 |
| G>R>B | 2 |
| G>B>R | 3 |
| B>G>R | 4 |
| B>R>G | 5 |
| R>B>G | 6 |
| R=G>B | 7 |
| G=B>R | 8 |
| B=R>G | 9 |
| R>G=B | 10 |
| G>B=R | 11 |
| B>R=G | 12 |
| R=G=B | 13 |

The respective calculation sections 21, 22 and 23 correct the input video signal Rin, Gin and Bin by the correction formulas (correction formulas before being divided by 100 shown in Fig. 10) according to the selection signal applied from the magnitude judgment section 10.

The signals Rout, Gout and Bout corrected by the respective calculation sections 21, 22 and 23 are transmitted to a DAC (Digital-to-Analog Converter) 30, and converted into analog signals by the DAC 30.

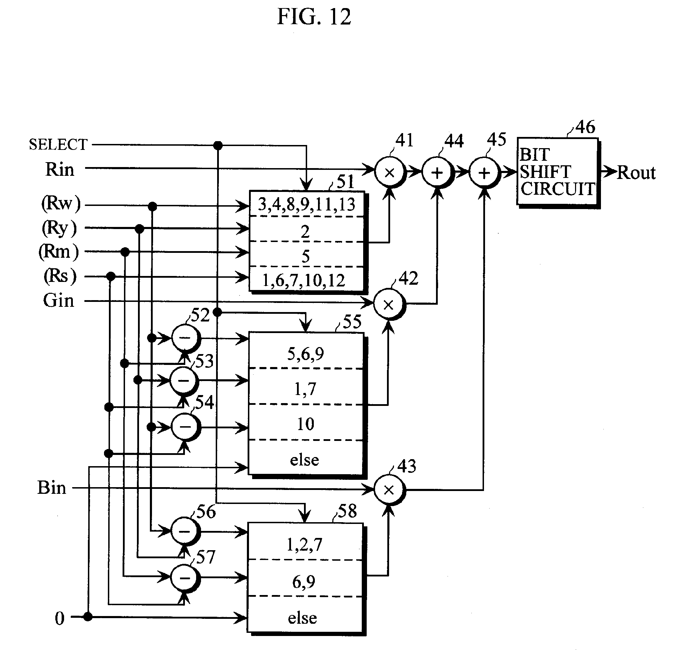

Fig. 12 depicts a configuration of the Rout calculation section 21.

The Rout calculation section 21 includes a multiplier 41 that multiplies the Rin by a correction coefficient, a multiplier 42 that multiplies the Gin by a correction coefficient, a multiplier 43 that multiplies the Bin by a correction coefficient, an adder 44 that adds a multiplication result of the multiplier 42 to that of the multiplier 41, an adder 45 that adds a multiplication result of the multiplier 43 to that of the multiplier 44, and a bit shift circuit 46 that shifts an addition result of the adder 45 to the right by eight bits so as to divide an addition result of the adder 45 by 100.

Further, the Rout calculation section 21 includes a circuit that generates the correction coefficient according to the selection signal for the Rin, a circuit that generates the correction coefficient according to the selection signal for the Gin, and a circuit that generates the correction coefficient according to the selection signal for the Bin. The circuit that generates the correction coefficient according to the selection signal for the Rin is composed by a selection circuit 51. The circuit that generates the correction coefficient according to the selection signal for the Gin is composed by three subtractors 52, 53 and 54, and a selection circuit 55. The circuit that generates the correction coefficient according to the selection signal for the Bin is composed by two subtractors 56 and 57 and a selection circuit 58.

If the input video signals correspond to the condition of, for example, R < G < B, the magnitude judgment section 10 outputs the selection signal "1" that represents the area S1. The selection circuit 51 selects and outputs Rs, the selection circuit 55 selects and outputs Ry-Rs, and the selection circuit 58 selects and outputs Rw-Ry. Accordingly, the multiplier 41 performs an operation of Rs*Rin. The multiplier 42 performs an operation of (Ry-Rs)*Gin. The multiplier 43 performs an operation of (Rw-Ry)*Bin.

The adder 44 performs an operation of Rs*Rin+(Ry-Rs)*Gin, and the adder 45 performs an operation of Rs*Rin+(Ry-Rs)*Gin+(Rw-Ry)*Bin. The bit shift circuit 46 shifts the addition result of the adder 45 to the right by eight bits.

The ADC 30 will next be described.

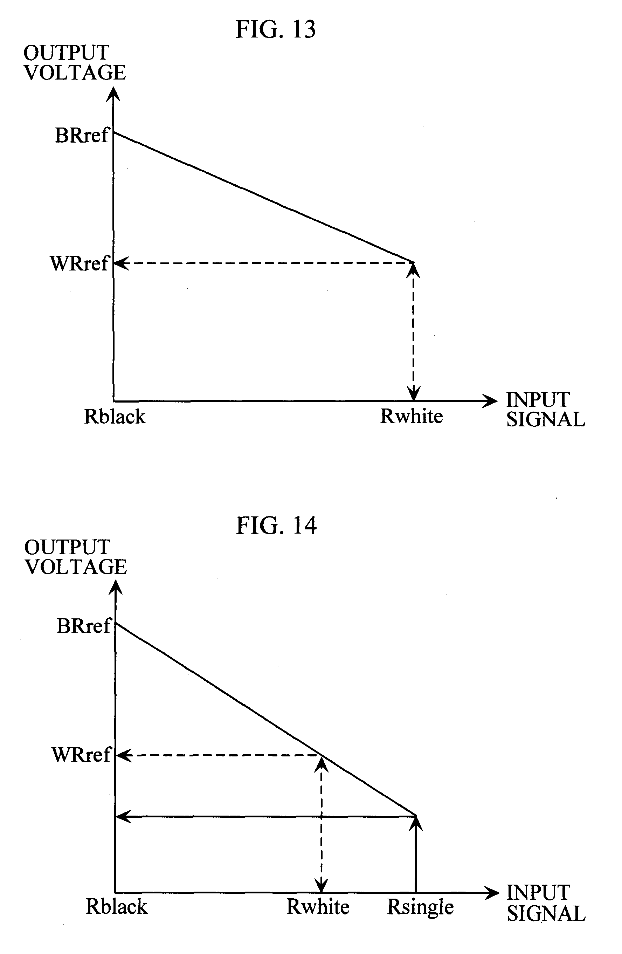

A black-side reference voltage that is an output voltage when the input signal is black, and a white-side reference voltage that is an output voltage when the input signal is white are applied to the ADC 30 for each of the R, G and B signals. Based on Figs. 13 and 14, a relationship between the input signal and the output signal of the ADC 30 in this embodiment will be described, taking the R signal as an example. In Figs. 13 and 14, Rblack denotes the black-side reference voltage for the R signal, and Rwhite denotes the white-side reference voltage for the R signal.

Generally, input/output characteristics of the ADC are adjusted so that the input signal corresponding to the white is a maximum value among the input signals as shown in Fig. 13. In this embodiment, the input/output characteristics of the ADC are adjusted so that the input signal is the maximum value when the luminance is the highest as shown in Fig. 14.

**Claims**

1. A color space correction circuit in a display apparatus comprising:

    means for holding optimal R, G and B correction values at chromaticity coordinate points corresponding to a white, primary colors and complementary colors, respectively, in a color reproduction region of a display on a chromaticity diagram;
    means for connecting the respective chromaticity coordinate points corresponding to the primary colors and the complementary colors to the chromaticity coordinate point corresponding to the white in the color reproduction region of the display on the chromaticity diagram, thereby dividing the color reproduction region of the display into a plurality of areas and judging to which area the chromaticity coordinate points corresponding to input signals belong; and
    means for correcting R, G and B values for the input signals based on optimal R, G and B correction values corresponding to the chromaticity coordinate points that correspond to three vertexes of the area to which the chromaticity coordinate points corresponding to the input signals are judged to belong, and based on the R, G and B values for the input signals.

2. The color space correction circuit according to claim 1, wherein
    the optimal R, G and B correction values at the chromaticity coordinate points corresponding to the white, the primary colors and the complementary colors, respectively, in the color reproduction region of the display on the chromaticity diagram are calculated from the chromaticity coordinate points corresponding to the white, the primary colors and the complementary colors in a target predetermined color reproduction region on the chromaticity diagram, the chromaticity coordinate points corresponding to the white, the primary colors and the complementary colors in the color reproduction region of the display on the chromaticity diagram, and the target chromaticity coordinate point corresponding to the white on the chromaticity diagram.

3. The color space correction circuit according to claim 1, wherein
    a corrected luminance of an R when only the R is used differs from the corrected luminance of the R at white 100%, a corrected luminance of a G when only the G is used differs from the corrected luminance of the G at white 100%, or a corrected luminance of a B when only the B is used differs from the corrected luminance of the B at white 100%.

4. The color space correction circuit according to claim 1, wherein
    a corrected video signal level of an R when only the R is used differs from the corrected video signal level of the R at white 100%, a corrected video signal level of a G when only the G is used differs from the corrected video signal level of the G at white 100%, or a corrected video signal level of a B when only the B is used differs from the corrected video signal level of the B at white 100%.

5. The color space correction circuit according to claim 1, wherein
    a corrected luminance of a cyan, that is the complementary color for an R, when only the cyan is used differs from a sum of a corrected luminance of a G at white 100% and a corrected luminance of a B at white 100%, a corrected luminance of a magenta, that is the complementary color for the G, when only the magenta is used differs from a sum of a corrected luminance of the R at white 100% and the corrected luminance of the B at white 100%, or a corrected luminance of yellow, that is the complementary color for the B, when only the yellow is used differs from a sum of the corrected luminance of the R at white 100% and the corrected luminance of the G at white 100%.

6. The color space correction circuit according to claim 1, wherein
    a corrected video signal level of a cyan, that is the complementary color for an R, when only the cyan is used differs from a sum of a corrected video signal level of a G at white 100% and a corrected video signal level of a B at white 100%, a corrected video signal level of a magenta, that is the complementary color for the G, when only the magenta is used differs from a sum of a corrected video signal level of the R at white 100% and the corrected video signal level of the B at white 100%, or a corrected video signal level of yellow, that is the complementary color for the B, when only the yellow is used differs from a sum of the corrected video signal level of the R at white 100% and the corrected video signal level of the G at white 100%.

7. The color space correction circuit according to claim 1, wherein

an optimal chromaticity coordinate point corresponding to a cyan that is the complementary color for an R in the color reproduction region of the display on the chromaticity diagram is set at a position shifted from a point of an intersection between a line that passes the chromaticity coordinate point corresponding to the R and the chromaticity coordinate point corresponding to the white in the color reproduction region of the display and a line that passes the chromaticity coordinate point corresponding to a G and the chromaticity coordinate point corresponding to a B in the color reproduction region of the display, toward the chromaticity coordinate point corresponding to the G or the chromaticity coordinate point corresponding to the B,

an optimal chromaticity coordinate point corresponding to a magenta that is the complementary color for the G in the color reproduction region of the display on the chromaticity diagram is set at a position shifted from a point of an intersection between a line that passes the chromaticity coordinate point corresponding to the G and the chromaticity coordinate point corresponding to the white in the color reproduction region of the display and a line that passes the chromaticity coordinate point corresponding to the R and the chromaticity coordinate point corresponding to the B in the color reproduction region of the display, toward the chromaticity coordinate point corresponding to the R or the chromaticity coordinate point corresponding to the B, and

an optimal chromaticity coordinate point corresponding to a yellow that is the complementary color for the B in the color reproduction region of the display on the chromaticity diagram is set at a position shifted from a point of an intersection between a line that passes the chromaticity coordinate point corresponding to the B and the chromaticity coordinate point corresponding to the white in the color reproduction region of the display and a line that passes the chromaticity coordinate point corresponding to the R and the chromaticity coordinate point corresponding to the G in the color reproduction region of the display, toward the chromaticity coordinate point corresponding to the R or the chromaticity coordinate point corresponding to the G.

8. The color space correction circuit according to claim 1, wherein

an optimal chromaticity coordinate point corresponding to a cyan that is the complementary color for an R in the color reproduction region of the display on the chromaticity diagram is set at a point of an intersection between a line that passes the chromaticity coordinate point corresponding to a G and the chromaticity coordinate point corresponding to a B in the color reproduction region of the display and a line that passes the chromaticity coordinate point corresponding to the R and the chromaticity coordinate point corresponding to the white in a target predetermined color reproduction region on the chromaticity diagram,

an optimal chromaticity coordinate point corresponding to a magenta that is the complementary color for the G in the color reproduction region of the display on the chromaticity diagram is set at a point of an intersection between a line that passes the chromaticity coordinate point corresponding to the R and the chromaticity coordinate point corresponding to the B in the color reproduction region of the display and a line that passes the chromaticity coordinate point corresponding to the R and the chromaticity coordinate point corresponding to the white in the target predetermined color reproduction region on the chromaticity diagram, and

an optimal chromaticity coordinate point corresponding to a yellow that is the complementary color for the B in the color reproduction region of the display on the chromaticity diagram is set at a point of an intersection between a line that passes the chromaticity coordinate point corresponding to the R and the chromaticity coordinate point corresponding to the G in the color reproduction region of the display and a line that passes the chromaticity coordinate point corresponding to the B and the chromaticity coordinate point corresponding to the white in the target predetermined color reproduction region on the chromaticity diagram.

## FIG. 1

## FIG. 2

| INPUT SIGNAL(%) (Rin,Gin,Bin) | NTSC LUMINANCE (R, G, B) | DISPLAY LUMINANCE (WITHOUT CORRECTION) (R, G, B) | DISPLAY LUMINANCE (CORRECTED) WITHOUT NORMALIZATION | DISPLAY LUMINANCE (CORRECTED) NORMALIZED | CORRECTION SIGNAL (Rout,Gout,Bout) |
|---|---|---|---|---|---|
| W(100,100,100) | (30,60,10) | W(30,40,30) | (30,40,30) (LWr,LWg,LWb) | (30,40,30) (LWr,LWg,LWb) | (Rw,Gw,Bw) |
| R(100,0,0) | (30,0,0) | R(30,0,0) | (40,0,0) (LRr,0,0) | (31,0,0) (LRr',0,0) | (Rs,0,0) |
| G(0,100,0) | (0,60,0) | G(0,40,0) | (0,72,0) (0,LGg,0) | (0,56,0) (0,LGg',0) | (0,Gs,0) |
| B(0,0,100) | (0,0,10) | B(0,0,30) | (0,0,16) (0,0,LBb) | (0,0,13) (0,0,LBb') | (0,0,Bs) |
| C(0,100,100) | (0,60,10) | C(0,40,30) | (0,40,20) (0,LCg,LCb) | (0,46,23) (0,LCg',LCb') | (0,Gc,Bc) |
| M(100,0,100) | (30,0,10) | M(30,0,30) | (25,0,30) (LMr,0,LMb) | (20,0,24) (LMr',0,LMb') | (Rm,0,Bm) |
| Y(100,100,0) | (30,60,0) | Y(30,40,0) | (25,40,0) (LYr,LYg,0) | (33,53,0) (LYr',LYg',0) | (Ry,Gy,0) |

FIG. 3

## FIG. 4

FIG. 5

## FIG. 6

LUMINANCE

30

0         x    100   R SIGNAL

## FIG. 7

LUMINANCE

40

0            100   G SIGNAL

## FIG. 8

SIGNAL

100

0        Lmax   LUMINANCE

## FIG. 9

## FIG. 10

| AREA | Rout | Gout | Bout |
|---|---|---|---|
| S1 | Rs×Rin+(Ry-Rs)×Gin+(Rw-Ry)×Bin | Gy×Gin+(Gw-Gy)×Bin | Bw×Bin |
| S2 | Ry×Rin+(Rw-Ry)×Bin | Gs×Gin+(Gy-Gs)×Rin+(Gw-Gy)×Bin | Bw×Bin |
| S3 | Rw×Rin | Gs×Gin+(Gc-Gs)×Bin+(Gw-Gc)×Rin | Bc×Bin+(Bw-Bc)×Rin |
| S4 | Rw×Rin | Gc×Gin+(Gw-Gc)×Rin | Bs×Bin+(Bc-Bs)×Gin+(Bw-Bc)×Rin |
| S5 | Rm×Rin+(Rw-Rm)×Gin | Gw×Gin | Bs×Bin+(Bm-Bs)×Rin+(Bw-Bm)×Gin |
| S6 | Rs×Rin+(Rm-Rs)×Bin+(Rw-Rm)×Gin | Gw×Gin | Bm×Bin+(Bw-Bm)×Gin |
| S7 | Rs×Rin+(Ry-Rs)×Gin+(Rw-Ry)×Bin | Gs×Gin+(Gy-Gs)×Rin+(Gw-Gy)×Bin | Bw×Bin |
| S8 | Rw×Rin | Gs×Gin+(Gc-Gs)×Bin+(Gw-Gc)×Rin | Bs×Bin+(Bc-Bs)×Gin+(Bw-Bc)×Rin |
| S9 | Rs×Rin+(Rm-Rs)×Bin+(Rw-Rm)×Gin | Gw×Gin | Bs×Bin+(Bm-Bs)×Rin+(Bw-Bm)×Gin |
| S10 | Rs×Rin+(Rw-Rs)×Gin | Gw×Gin | Bw×Bin |
| S11 | Rw×Rin | Gs×Gin+(Gw-Gc)×Bin | Bw×Bin |
| S12 | Rw×Rin | Gw×Gin | Bs×Bin+(Bw-Bs)×Rin |
| S13 | Rw×Rin | Gw×Gin | Bw×Bin |

EP 1 591 994 A1

FIG. 11

FIG. 12

FIG. 13

FIG. 14

<table>
<tr><td colspan="2" align="center">**INTERNATIONAL SEARCH REPORT**</td><td colspan="2">International application No.<br>PCT/JP2004/001301</td></tr>
</table>

| A. CLASSIFICATION OF SUBJECT MATTER |
|---|
| Int.Cl$^7$  G09G5/02, H04N1/46, 1/40, 9/64 |

According to International Patent Classification (IPC) or to both national classification and IPC

**B. FIELDS SEARCHED**

Minimum documentation searched (classification system followed by classification symbols)
Int.Cl$^7$  G09G3/00-5/42, H04N1/40, 1/46, 9/64, G06T5/00

Documentation searched other than minimum documentation to the extent that such documents are included in the fields searched

| | | | |
|---|---|---|---|
| Jitsuyo Shinan Koho | 1926–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | EP 1028586 A2  (MITSUBISHI DENKI KABUSHIKI KAISHA),<br>16 August, 2000 (16.08.00),<br>Par. Nos. [0108] to [0115], [0160]; Figs. 16 to 18<br>& JP 2000-287074 A | 1,2,7,8 |
| Y | US 4989080 A  (TAKANORI ITO),<br>29 January, 1991 (29.01.91),<br>Column 3, line 56 to column 4, line 68; Figs. 1to 3<br>& JP 1-228268 A | 1,2,7,8 |
| Y | JP 5-63969 A  (Brother Industries, Ltd.),<br>12 March, 1993 (12.03.93),<br>Claim 1; Par. Nos. [0015], [0020]; Figs. 2 to 4<br>(Family: none) | 1,2,7,8 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>11 March, 2004 (11.03.04) | Date of mailing of the international search report<br>30 March, 2004 (30.03.04) |
|---|---|
| Name and mailing address of the ISA/<br>Japanese Patent Office | Authorized officer |
| Facsimile No. | Telephone No. |

Form PCT/ISA/210 (second sheet) (July 1998)

**EP 1 591 994 A1**

<table>
<tr><td colspan="2">INTERNATIONAL SEARCH REPORT</td><td>International application No.<br>PCT/JP2004/001301</td></tr>
</table>

C (Continuation). DOCUMENTS CONSIDERED TO BE RELEVANT

| Category* | Citation of document, with indication, where appropriate, of the relevant passages | Relevant to claim No. |
|---|---|---|
| A | Teruo KUSAKA et al., "Color Yuki EL Display no Kaihatsu", ITE Technical Report, 22 January, 1998 (22.01.98), Vol.23, No.2, pages 1 to 6; page 5; Fig. 9 | 1-8 |

Form PCT/ISA/210 (continuation of second sheet) (July 1998)

27